# EUROPEAN PATENT APPLICATION

(11) **EP 4 624 425 A1**
(43) Date of publication of application: **01.10.2025**
(21) Application number: 24167901.8
(22) Date of filing: 29.03.2024
(51) Int. Cl.: C02F 1/02, C02F 1/74, A62D 3/40, C02F 11/08, C02F 101/38

(54) **A PRE-TREATMENT METHOD TO INCREASE THE BIODEGRADABILITY OF ACRYLONITRILE WASTEWATER**

(71) Applicant: Socar Turkey Arastirma Gelistirme Ve Inovasyon A.S., 34396 Istanbul (TR)
(72) Inventor: ALPAY UYANIKER, Tayyibe, Izmir (TR); PASHAYEVA, Bike, Izmir (TR); TAYIZ, Nazmiye Merve, Istanbul (TR); USLU, Yasin Abdullah, Kocaeli (TR); INCE, Mahir, Kocaeli (TR); EZDESIR, Ayhan, Izmýr (TR)
(74) Representative: Sevinç, Cenk

(57) **Abstract**

In the invention, a method to increase the biodegradability of wastewater generated during the production of acrylonitrile (ACN), which is used in the synthesis of materials such as plastic, acrylic fibre, synthetic rubber, and carbon fibre is described. With the wet air oxidation method that is the subject of the invention, limited and selective oxidation of the said wastewater is ensured, increasing its biodegradability, and making it convenient for treatment with the activated sludge process, in other words, the method that is the subject of the invention is used as a pre-treatment process.

## Description

### Technical Field

The invention relates to a method to increase the biodegradability of wastewater generated during the production of acrylonitrile (ACN), which is used in the synthesis of materials such as plastic, acrylic fibre, synthetic rubber, and carbon fibre. With the method of the invention, limited and selective oxidation of said wastewater is achieved, increasing its biodegradability and making it convenient for biological treatment.

### State of the Art

Acrylonitrile (ACN, CH₂=CH-C≡N) is an important industrial raw material with annual production exceeding 5 million tons worldwide. Acrylonitrile is used in the production of acrylic and modacrylic fibers, elastomers, acrylonitrile-butadiene-styrene and styrene-acrylonitrile resins, nitrile rubbers, gas barrier resins, and chemical intermediates such as adiponitrile and acrylamide, and since acrylonitrile is a toxic chemical that is soluble in water, it is emitted from industrial facilities in the form of steam and/or wastewater. According to the Environmental Protection Agency (EPA), ACN ranks third on the list of 129 priority pollutants because acute inhalation of acrylonitrile can cause weakness, headache, dizziness, confusion, nausea, and vomiting, and can also lead to death. Moreover, its harms are not limited only to humans, it can also cause problems such as acute toxic effects, death of animals, birds, and fish, and death or low growth rate in plants. There is evidence of fetotoxicity, teratogenicity, and embryotoxicity in the offspring of rats exposed to acrylonitrile by inhalation or ingestion during pregnancy [1]. In addition, ACN also has indications of carcinogenic and teratogenic activity [2].

Conventional biological wastewater treatment technologies are also used to treat acrylonitrile wastewater. These processes remove most pollutants from raw wastewater and therefore discharge regulations for the removal of organics are generally met. However, in biological treatment processes of wastewater with high toxicity, the metabolic activity of microorganisms may be inhibited. In biological treatment, some biorefractor substances with high molecular weights such as cyanides, nitriles, nitrogen heterocyclic compounds and pollutants with high toxicity such as benzotriazoles, indoles and pyridines cannot be removed effectively. Cyanides and nitriles are acutely toxic substances for animals, and benzotriazoles have both estrogenic and antiestrogenic effects on aquatic life [3,4]. Some indole and pyridine derivatives also have pneumotoxic, genotoxic and mutagenic effects on animals [5, 6]. Accumulation of these compounds in the aquatic environment may also pose an ecological risk [7].

For each ton of acrylonitrile produced, an equivalent amount of wastewater containing hazardous substances is generated. Acrylonitrile wastewater contains various pollutants such as alkenes, aldehydes, ketones, aromatic compounds, oligomers and cyanogens that are resistant to biodegradation. In addition, wastewater generation at high flow rates and complex and variable water quality make the degradation of acrylonitrile wastewater very difficult. In the state-of the-art, supercritical water oxidation, incineration, wet air oxidation, ozonisation, biological treatment, adsorption, activated sludge systems and various combinations of these are applied in the treatment of such wastewater. Since the incineration process occurs at high temperatures (750-850°C), energy consumption is quite high. The activated sludge process, which is widely used for the treatment of ACN wastewater, has low efficiency due to the presence of recalcitrant, inhibitory aromatic compounds and/or nitriles in the wastewater. Additionally, chemical methods such as ozonisation and photocatalytic oxidation are also used, but the high operating costs and difficult reaction conditions in the production of secondary pollutants generally make them an undesirable option [8]. In addition, while ACN wastewater cannot be treated in the classical activated sludge system due to its toxic structure, its treatment with the wet air oxidation process requires high costs compared to the activated sludge system. Since acrylonitrile has a strong toxicity against anaerobic bacteria, it is difficult to treat it by anaerobic treatment. Wet air oxidation (WAO), one of the mentioned treatment methods, is considered an important technique for the treatment of wastewater, especially toxic wastewater containing high amounts of organic pollutants. WAO is an exothermic reaction in which dissolved oxygen reacts with the weak bonds of organic compounds to form hydroxyl and organic radicals, initiating a free radical chain reaction. Many organic compounds in WAO are gradually degraded to lower molecular weight compounds and finally to lower carboxylic acids such as acetic, formic and oxalic acids. In the case of complete oxidation, organics are converted to carbon dioxide (CO₂), water (H₂O), ammonia (for nitrogen-containing wastes) and sulphate (for sulphur-containing wastes). According to the characterization of wastewater, it could result in other products such as halogen acids (for halogenated wastes) and low molecular weight organic compounds (LMWO). Unlike other advanced oxidation processes (AOP), WAO can be applied in high wastewater flows, high organic loadings (especially in the treatment of wastewater containing 10000-100000 mg/L COD) and/or in the treatment of toxic pollutants where biological treatment cannot be applied. WAO is the process of oxidising organic and oxidisable inorganic components in the liquid phase at high temperatures (150-370°C) using air or pure oxygen. High pressures (2-20 MPa) are required to keep the reaction in the liquid phase. If the reaction is not maintained in the liquid phase, the compounds burn what is known as a combustion reaction. Wet air oxidation consists of a chain reaction in which oxygen, hydroxyl, hydroperoxyl and organic hydroperoxy free radicals participate. The initial step, in which the oxidation capacity is low due to minimum free radical formation, is followed by the second step, which is more influential and faster, and the reaction time decreases with increasing temperature and pressure. As the reaction continues, it becomes quite complex as oxygen and radicals are formed and react with oxidation intermediates. While these parallel reactions with oxidation intermediate products consume the free radicals formed, they continue to create organic radicals with a new and different activity, thus the overall reaction rate varies depending on the rate of destruction of the waste. When we look at the development of radicals in the process, it can be said that there are many factors which will affect the beginning, development and results of the reaction, and therefore the design of the reactor system that determines these factors is of great importance. For example, adding a strong oxidant such as hydrogen peroxide to the system significantly increases the efficiency of the system. Adding the appropriate catalyst positively affects the initial free radical formation. Some studies indicate that even the material used in the construction of the reactor affects the reaction rate and process efficiency [9].

The utility model application numbered CN216711791U in the state of the art relates to an acrylonitrile wastewater pre-treatment device. The aim of said document is to provide a pre-treatment device that enables the pre-treatment of acrylonitrile wastewater, which can also improve the ozone utilisation rate and oxidation capacity, and simultaneously remove COD and total nitrogen. It is also stated that said device can effectively improve the biodegradability of acrylonitrile wastewater, increase BOD/COD to over 0.3, and simultaneously remove COD and total nitrogen from water. However, in said study, persulphate is used as a catalyst in the ozonisation process. The persulphate used creates sulphate pollution as a secondary pollutant in wastewater, which has toxic effects on humans, plants and animals. In addition, the fact that acrylonitrile wastewater exits the process at a temperature of 90-100 °C will reduce the efficiency of the ozonisation process, as the rate of ozone degradation increases with temperature, it necessitates the cooling of wastewater before ozonisation.

Due to reasons such as the limitations and inadequacies of the solutions in the state of the art, the treatment of high toxicity ACN wastewater with low efficiency and high costs, the resistance of ACN wastewater to biodegradation, the inability of existing techniques to respond to variable water character, excessive chemical consumption, and secondary product formation (chemical sludge, membrane concentrate, etc.), it has been necessary to improve in the treatment of acrylonitrile wastewater.

### Brief Description and Aims of the Invention

In the invention, a method to increase the biodegradability of wastewater generated during the production of acrylonitrile (ACN), which is used in the synthesis of materials such as plastic, acrylic fibre, synthetic rubber and carbon fibre is described. With the wet air oxidation method that is the subject of the invention, limited and selective oxidation of the said wastewater is ensured, increasing its biodegradability and making it convenient for treatment with the activated sludge process.

The aim of the invention is to increase the biodegradability of acrylonitrile wastewater with high efficiency and low cost. By means of the optimum temperature, pressure and reaction time parameters in the method that is the subject of the invention and by the BOD₇/COD ratio of wastewater being over 0.3, the biodegradability of water is increased with high efficiency and low cost.By means of the method of the invention, acrylonitrile wastewater, which is not suitable for treatment with activated sludge under normal conditions, can be treated with activated sludge due to partial oxidation due to wet air oxidation and thus ensuring the removal of toxic and recalcitrant pollutants.

### Description of Drawings

**Figure 1** Change of BOD₅/COD ratios at different reaction temperatures (indicated by different symbols) and initial pressures
**Figure 2** Change of BOD₇/COD ratios at different reaction temperatures (indicated by different symbols) and initial pressures
**Figure 3** BOD₅/COD-Time graph
**Figure 4** BOD₇/COD-Time graph
**Figure 5** System in which the method that is the subject of the invention is carried out

### Definition of Elements/Parts Composing the Invention

**1.** Dry air tube
2. Stainless steel reactor
**3.** Mixer
**4.** Mixer motor
**5.** Heater-Cooler
**6.** Pressure sensor
**7.** Pressure control valve
**8.** Gas release valve
**9.** Temperature sensor
**10.** Wastewater drain valve
**11.** Flanged platform

### Detailed Description of the Invention

The invention relates to a method to increase the biodegradability of wastewater generated during the production of acrylonitrile (ACN), which is used in the synthesis of materials such as plastic, acrylic fibre, synthetic rubber, and carbon fibre. With the method of the invention, limited and selective oxidation of said wastewater is ensured, increasing its biodegradability, and making it convenient for treatment with the activated sludge process. In other words, the method that is the subject of the invention is a pre-treatment process that allows the use of activated sludge process in the treatment of acrylonitrile wastewater coming from the acrylonitrile factory.

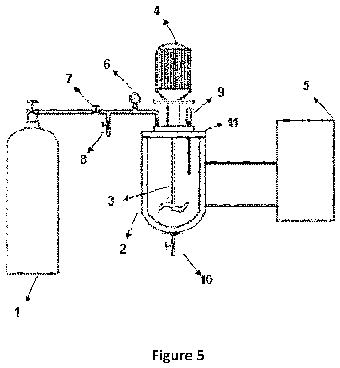

The stainless-steel reactor (2) used in the method of the invention is made of stainless steel to be resistant to the corrosive effects of wastewater and reaction gases. The upper part of the reactor is closed with a flange that provides a sealing feature to withstand the pressure of the reaction and the integration of elements such as the stirrer motor and temperature sensor into the system. The heat jacket surrounding the reactor ensures that the heat transfer fluid in the heater-cooler (5) is circulated jacket of the reactor, heating the system and keeping it at a constant temperature. In addition, the temperature sensor (9), mixer (3), pressure sensor (6), pressure control valve (7), gas release valve (8), and wastewater drain valve (10) located in the system (Figure 5) and all pipes and connection equipment in the system are made of inert materials that will not be affected by the corrosive effects of reaction products, and all materials are capable of withstanding the reaction temperature and pressure. In the system shown in Figure 5, the stainless-steel reactor (2) chamber has a structure that can be mounted and demounted on the platform where elements such as the mixer motor (4) and temperature sensor (9) are located, through screws with nuts. This platform also serves as a leak-proof cover for the stainless-steel reactor (2). In the batch operated process, after the wastewater is fed to the stainless-steel reactor (2), the stainless-steel reactor (2) chamber is mounted on the platform and the reaction is started.

A pre-treatment method to increase the biodegradability of acrylonitrile wastewater that is the subject of the invention comprises the process steps of:
i. feeding acrylonitrile (ACN) wastewater containing high concentrations of recalcitrant and toxic pollutants to the stainless-steel reactor (2),
ii. increasing the air pressure of the stainless-steel reactor (2) through which the wastewater is fed via a dry air tube (1) to provide the oxygen required for oxidation and to keep the reaction in the liquid phase,
iii. mixing the wastewater with the mixer (3) throughout the reaction period in order to ensure homogeneous contact of the wastewater with oxygen,
iv. heating the stainless-steel reactor (2) with the heater-cooler (5) and keeping it at a constant temperature,
v. cooling the stainless-steel reactor (2),
vi. reducing the pressure of the oxidised reactor outlet via the gas release valve (8), and
vii. discharging the oxidised liquid from the stainless-steel reactor (2) via the wastewater drain valve (10).

In a different embodiment of the invention, a pre-treatment method to increase the biodegradability of acrylonitrile wastewater that is the subject of the invention comprises the process steps of:
i. feeding 1-5 litres of acrylonitrile (ACN) wastewater containing high concentrations of recalcitrant and toxic pollutants to the stainless-steel reactor (2),
ii. increasing the air pressure of the stainless-steel reactor (2) through which the wastewater is fed to 5-40 bar initial air pressure via a dry air tube (1) in order to provide the oxygen required for oxidation and to keep the reaction in the liquid phase,
iii. mixing the wastewater with the mixer (3) throughout the reaction period (45-180 min) at a rate of 200-300 rpm to ensure homogeneous contact of the wastewater with oxygen,
iv. heating the stainless-steel reactor (2) with the heater-cooler (5) to 100-195°C and keeping it at constant temperature for 45-180 minutes,
v. cooling the stainless-steel reactor (2) with the heater-cooler to room temperature
vi. reducing the pressure of the oxidised reactor outlet via the gas release valve (8), and
vii. discharging the oxidised liquid from the stainless-steel reactor (2) via the wastewater drain valve (10).

In a different embodiment of the invention, a pre-treatment method to increase the biodegradability of acrylonitrile wastewater that is the subject of the invention comprises the process steps of:
i. feeding 2 litres of acrylonitrile (ACN) wastewater containing high concentrations of recalcitrant and toxic pollutants to the stainless-steel reactor (2),
ii. increasing the air pressure of the stainless-steel reactor (2) through which the wastewater is fed, to 15 bar initial air pressure via a dry air tube (1) in order to provide the oxygen required for oxidation and to keep the reaction in the liquid phase,
iii. mixing the wastewater with the mixer (3) throughout the reaction period of 45 minutes at a rate of 250 rpm to ensure homogeneous contact of the wastewater with oxygen,
iv. heating the stainless-steel reactor (2) with the heater-cooler (5) to 150 °C and keeping it at a constant temperature for 45 minutes,
v. cooling the stainless-steel reactor (2) with the heater-cooler to room temperature
vi. reducing the pressure of the oxidised reactor outlet via the gas release valve (8), and
vii. discharging the oxidised liquid from the stainless-steel reactor (2) via the wastewater drain valve (10).

In the invention, the BOD₇/COD ratio was taken into account instead of the BOD₅/COD ratio because the pollutants in ACN wastewater are hardly biodegradable and domestic wastewater treatment sludge was used as the inoculum in BOD analysis as per the test standard. When determining the optimum operating conditions (temperature, pressure, and reaction time), the BOD₇/COD ratio above 0.3 is taken as the basis in wet air oxidation application. In order for the wastewater to be biologically treatable, this ratio must be at least 0.3. ACN wastewater can be of different characterisations depending on the ACN production process and the raw materials used. Therefore, an optimisation study specific to each wastewater needs to be carried out. In experimental studies carried out with wastewater used in the method of the invention, the optimum reaction temperature and initial pressure were determined to be 150 °C and 15 bar, respectively. While the BOD₇/COD ratio exceeded the threshold value of 0.3 at the end of the 45-minute reaction time, this value increased linearly to 0.55 towards the end of the 180-minute reaction time.

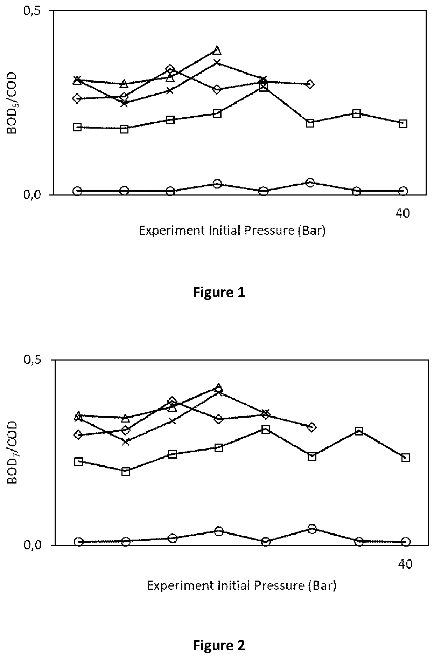

BOD₅/COD and BOD₇/COD results, which are a measure of biological treatability, for the wastewater obtained by the method that is the subject of invention and convenient for treatment with activated sludge are given in Figure 1 and Figure 2. As can be seen from said figures, the degradation efficiency of recalcitrant and/or toxic pollutants increases with increasing reaction temperature and pressure at a fixed reaction time, and accordingly, BOD/COD ratios increase. The source of the increase in the BOD/COD ratio in the WAO process is that dissolved oxygen under high pressure and temperature reacts with the weak bonds of organic compounds to form hydroxyl and organic radicals and initiate a free radical chain reaction, and exothermic reactions occur in which many organic compounds gradually decompose into lower molecular weight compounds. Since ACN wastewater has toxic and carcinogenic properties due to pollutants such as acrylonitrile, acrylamide, acrylic acid, cyanide etc. in its content, it cannot be mineralised by activated sludge. The degradation rate of these toxic and recalcitrant pollutants increases with increasing reaction temperature and pressure in the WAO process, and accordingly, the BOD/COD ratio of ACN wastewater increases.

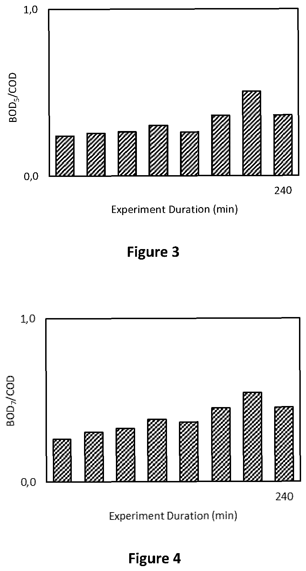

In WAO experiments carried out at different reaction times at constant reaction pressure and temperature, it can be seen in Figures 3 and 4 that BOD/COD ratios increase with increasing reaction time and begin to decrease after a certain period of time. The WAO process becomes quite complex as oxygen and radicals are formed and the resulting radicals react with oxidation intermediate products. While these parallel reactions with oxidation intermediate products consume the free radicals formed, they continue to create organic radicals with a new and different activity, so the overall reaction rate varies depending on the degradation rate of the pollutant. Therefore, keeping the reaction time too long led to some compounds that are toxic and cause inhibition for activated sludge are also formed, in addition to low molecular weight and biodegradable compounds, and these compounds result in a lower BOD/COD ratio.

In the invention, considering that the wet air oxidation system will operate continuously, the waste heat of the oxidised hot outlet water, whose reaction period has been completed, and the cold wastewater that will be fed to the system can be heated to a certain temperature by means of a heat exchanger. Thus, the energy efficiency of the system can be increased.

### REFERENCES

**[1]** Canadian Centre for Occupational Health and Safety (CCOHS), Acrylonitrile, Cheminfo. 2000.
**[2]** Martínková L;Uhnáková B;Pátek M;Nesvera J;Kren V; (n.d.). Biodegradation potential of the genus Rhodococcus. Environment international. https://pubmed.ncbi.nlm.nih.gov/18789530/
**[3]** Li, J., Sato, M., & Ohshima, T. (2007). Degradation of phenol in water using a gas-liquid phase pulsed discharge plasma reactor. Thin Solid Films, 515(9), 4283-4288. https://doi.org/10.1016/J.TSF.2006.02.070
**[4]** Kadar, E., Dashfield, S., & Hutchinson, T. H. (2010). Developmental toxicity of benzotriazole in the protochordate Ciona intestinalis (Chordata, Ascidiae). Analytical and Bioanalytical Chemistry, 396(2), 641-647. https://doi.org/10.1007/s00216-009-3293-8
**[5]** Liang, X., Wang, M., Chen, X., Zha, J., Chen, H., Zhu, L., & Wang, Z. (2014). Endocrine disrupting effects of benzotriazole in rare minnow (Gobiocypris rarus) in a sex-dependent manner. Chemosphere, 112, 154-162. https://doi.org/10.1016/j.chemosphere.2014.03.106
**[6]** Gu, J. D., & Berry, D. F. (1991). Degradation of substituted indoles by an indole-degrading methanogenic consortium. Applied and Environmental Microbiology, 57(9), 2622-2627. https://doi.org/10.1 128/aem.57.9.2622-2627.1991
**[7]** Sims, G. K., O'Loughlin, E. J., & Crawford, R. L. (1989). Degradation of pyridines in the environment. Critical Reviews in Environmental Control, 19(4), 309-340. https://doi.org/10.1080/10643388909388372
**[8]** Pal, A., Gin, K. Y.-H., Lin, A. Y.-C., & Reinhard, M. (2010). Impacts of emerging organic contaminants on freshwater resources: Review of recent occurrences, sources, fate and effects. Science of The Total Environment, 408(24), 6062-6069. https://doi.org/10.1016/j.scitotenv.2010.09.026
**[9]** Kolaczkowski ST, Beltran FJ, McLurgh DB, Rivas FJ. 1997. Wet Air Oxidation of Phenol. Process Saf Environ Prot 1997;75:257-65. https://doi.org/10.1205/095758297529138.

## Claims

1. A pre-treatment method to increase the biodegradability of acrylonitrile wastewater, comprising the process steps of:
i. feeding acrylonitrile (ACN) wastewater containing high concentrations of recalcitrant and toxic pollutants to the stainless-steel reactor (2),
ii. increasing the air pressure of the stainless-steel reactor (2) through which the wastewater is fed via a dry air tube (1) in order to provide the oxygen required for oxidation and to keep the reaction in the liquid phase,
iii. mixing the wastewater with the mixer (3) throughout the reaction period to ensure homogeneous contact of the wastewater with oxygen,
iv. heating the stainless-steel reactor (2) with the heater-cooler (5) and keeping it at a constant temperature,
v. cooling the stainless-steel reactor (2),
vi. reducing the pressure of the oxidised reactor outlet via the gas release valve (8), and
vii. discharging the oxidised liquid from the stainless-steel reactor (2) via the wastewater drain valve (10).

2. A method according to claim 1, comprising the steps of:
i. feeding 1-5 litres of acrylonitrile (ACN) wastewater containing high concentrations of recalcitrant and toxic pollutants to the stainless-steel reactor (2),
ii. increasing the air pressure of the stainless-steel reactor (2) through which the wastewater is fed, to 5-40 bar initial air pressure via a dry air tube (1) in order to provide the oxygen required for oxidation and to keep the reaction in the liquid phase,
iii. mixing the wastewater with the mixer (3) throughout the reaction period of 45-180 minutes at a rate of 200-300 rpm in order to ensure homogeneous contact with oxygen,
iv. heating the stainless-steel reactor (2) with the heater-cooler (5) to 100-195°C and keeping it at constant temperature for 45-180 minutes,
v. cooling the stainless-steel reactor (2) with the heater-cooler (5) to room temperature,
vi. reducing the pressure of the oxidised reactor outlet via the gas release valve (8), and
vii. discharging the oxidised liquid from the stainless-steel reactor (2) via the wastewater drain valve (10).

3. A method according to claim 1, comprising the steps of:
i. feeding 2 litres of acrylonitrile (ACN) wastewater containing high concentrations of recalcitrant and toxic pollutants to the stainless-steel reactor (2),
ii. increasing the air pressure of the stainless-steel reactor (2) through which the wastewater is fed to 15 bar initial air pressure via a dry air tube (1) to provide the oxygen required for oxidation and to keep the reaction in the liquid phase,
iii. mixing the wastewater with the mixer (3) throughout the reaction period of 45 minutes at a rate of 250 rpm to ensure homogeneous contact of the wastewater with oxygen,
iv. heating the stainless-steel reactor (2) with the heater-cooler (5) to 150 °C and keeping it at a constant temperature for 45 minutes,
v. cooling the stainless-steel reactor (2) with heater-cooler (5) to room temperature,
vi. reducing the pressure of the oxidised reactor outlet via the gas release valve (8), and
vii. discharging the oxidised liquid from the stainless-steel reactor (2) via the wastewater drain valve (10).
